# EUROPEAN PATENT SPECIFICATION

(11) **EP 0 661 146 B1**
(45) Date of publication and mention of the grant of the patent: **05.04.2000**
(21) Application number: 94119779.0
(22) Date of filing: 14.12.1994
(51) Int. Cl.: B29C 44/06, B29C 67/24, B29C 45/16

(54) **Method and apparatus for reaction injection moulding bicolored polyurethane parts**
Verfahren und Vorrichtung zum Reaktionsspritzgiessen von zweifarbigen Polyurethanformteilen
Procédé et dispositif pour mouler par injection à réaction des pièces bicolores en polyuréthane

(30) Priority: 27.12.1993 JP 35275293
(43) Date of publication of application: 05.07.1995
(73) Proprietor: TOYODA GOSEI CO., LTD., Nishikasugai-gun Aichi-ken (JP)
(72) Inventor: Ishikake, Masanao, c/o Toyoda Gosei Heiwacho Plant, Nakashima-gun, Aichi 490-13 (JP); Kawakita, Yukio, c/o Toyoda Gosei Heiwacho Plant, Nakashima-gun, Aichi 490-13 (JP); Sugiyama, Shogo, c/o Toyoda Gosei Heiwacho Plant, Nakashima-gun, Aichi 490-13 (JP); Goto, Masayuki, c/o Toyoda Gosei Heiwacho Plant, Nakashima-gun, Aichi 490-13 (JP); Nagasaka, Naohisa, c/o Toyoda Gosei Heiwacho Plant, Nakashima-gun, Aichi 490-13 (JP)
(74) Representative: Blumbach, Kramer & Partner GbR

(56) References cited:
- EP-A- 0 162 130
- EP-A- 0 461 522
- EP-A- 0 594 981
- DE-A- 3 409 402
- DE-A- 3 804 619
- DE-A- 3 938 891
- GB-A- 1 339 445
- US-A- 3 865 915
- US-A- 3 883 629
- US-A- 3 970 732
- PATENT ABSTRACTS OF JAPAN vol. 5 no. 190 (M-100) ,4 December 1981 & JP-A-56 111648 (TOKYO SEAT KK) 3 September 1981,

## Description

The present invention relates to a method and apparatus by which two-color parts that have different colors, properties, etc., in the surface and the interior can be molded from polyurethane materials through RIM (reaction-injection molding).

The conventional known RIM technology for molding polyurethane parts employs a mold having a single gate connected to a single head for mixing two components and it involves the following steps:
(1) the mold is opened and a mold release agent is applied to the surface of the mold cavity;
(2) if an insert is to be used, same is set in the cavity and the mold is closed;
(3) an RIM polyurethane material coming from the mixing head is injected into the cavity through the gate so that the respective components will react to cure; and
(4) the mold is opened and the molded part is removed.

Among these steps, the application of the mold release agent accounts for a large portion of the length of the molding cycle and has been a bar to cycle reduction. Furthermore, the use of a single type of RIM polyurethane material makes it difficult to provide different properties in the surface and the interior of the molded part (providing different blow ratios is all that can be done) and it has been impossible to achieve free alterations in various characteristics such as hand and endurance. Polyurethane molding by RIM is sometimes done after pigment-containing polyurethane materials (colorants) are applied to the surface of the mold cavity but this application step is time-consuming.

With a view to solving these problems, the applicant previously proposed a method of molding two-color parts by RIM that included the step of injecting different property polyurethane materials into an evacuated mold cavity (see non-prepublished EP-A 0594 981). This method comprises:
(1) reducing the pressure in the cavity of a mold; (2) then injecting a small amount of a surface-forming RIM polyurethane material into the evacuated cavity through a gate; and
(3) subsequently, injecting an interior-forming RIM polyurethane material into the same cavity in a similar manner.

EP-A-461 522 is directed to a process for manufacturing a polyurethane article in a mold by RIM without using low-boiling blowing agents. Instead thereof, water is used as blowing agent so that a vacuum is needed in the mold for evaporating the water even at temperatures of 70 to 90° C in the polyurethane material so as to obtain a foaming of the polyurethane material in the central part. All material is injected in a single step by a single injection head.

A first object of the present invention is to provide a method and an apparatus for molding different property polyurethane parts by RIM at a lower equipment cost than the previous proposal.

A second object of the invention is to provide a method and an apparatus for molding different property polyurethane parts by RIM, according to which a surface area that is different from the interior in color, properties, etc. can be selectively formed in a desired site of the molded part.

The method of molding a different property polyurethane part by RIM to attain the first object of the invention is defined in claim 1.

This method can be implemented with an apparatus as defined in claim 6.

In the method and the apparatus described above, the number of heads that can be used for mixing two surface-forming components is not limited to one and two or more mixing heads may be used; this is also true with the head for mixing two interior-forming components. The number of common gates to be used is not limited to one, either, and two or more common gates may be used in such a way that they are respectively connected to the head for mixing two surface-forming components and to the head for mixing two interior-forming components.

The method of molding a different property polyurethane part by RIM to attain the second object of the invention comprises the features mentioned in claim 12.

This method can be implemented with an apparatus as defined in claim 18.

In the method and the apparatus described above, the number of gates that can be used to form the surface of the molded part is not limited to one and two or more gates may be used, with each being connected to the head for mixing two surface-forming components. The number of gates that can be used to form the interior of the molded part is not limited to one, either, and two or more gates may be used, with each being connected to the head for mixing two interior-forming components.

The surface-forming RIM polyurethane material may contain at least one auxiliary component typically selected from among a colorant, a mold release agent and a catalyst.

According to the method and apparatus that are intended to attain the first object of the present invention, two-color parts the interior of which is covered with a thin film of the surface area can be molded by RIM from polyurethane. The exact theory of this phenomenon has not yet been clarified but the reason may be postulated as follows. When the cavity of a mold under vacuum is filled with a small amount of the surface forming RIM polyurethane material, the injected polyurethane material as it undergoes a sudden drop in pressure from the existing pressurized state scatters within the cavity and is deposited as a thin film on the surface of the cavity, thereby forming the surface area of the two-color part to be eventually molded. When the interior forming RIM polyurethane material is thereafter injected into the cavity, the injected polyurethane material fills the cavity and its components react to cure, forming the interior of the two-color part. The amount of injection of the surface-forming RIM polyurethane material and the time schedule for injecting the surface- and interior-forming RIM polyurethane materials can be set in any desired way.

In addition, according to the method and the apparatus under consideration, the head for mixing the surface-forming components may be used exclusively for the purpose of forming the surface-forming RIM polyurethane material whereas the head for mixing the interior-forming components may be used exclusively for the purpose of forming the interior-forming RIM polyurethane material; therefore, the respective heads can be fabricated as inexpensive two-component mixing heads.

According to the method and apparatus that are intended to attain the second object of the present invention, not only the advantage that is described just above but also another meritorious effect can be attained; namely, a surface area that is different from the interior in color, properties, etc. can be selectively formed in any desired sites of the molded part by properly setting the position of the surface-forming gate or the amount of injection of the surface-forming RIM polyurethane material.

In a preferred embodiment, at least one auxiliary component selected from a colorant, a mold release agent and a catalyst may be mixed with the surface forming RIM polyurethane material and this is effective in ensuring that the eventually molded two-color part can be easily rendered to have different colors, properties, etc., in the surface area and the interior. Stated specifically, better release of the molded part is achieved by mixing a mold release agent with the polyurethane material. If a colorant is mixed, the colored surface area will hide the interior of the molded part in a better way. If a catalyst is mixed to control a certain quality such as endurance, hardness or foam density, different properties can easily be provided in the surface area and the interior.

The present invention will now be explained further by way of example and with reference to the accompanying drawings, in which:
Fig. 1 is a cross-sectional view showing the step of forming the surface area of a polyurethane coating on a steering wheel in the method of molding a two-color part in the first embodiment of the invention;
Fig. 2 is a plan view showing the step of setting the core of the steering wheel in the lower mold;
Fig. 3 is a cross-sectional view showing the step of the forming the interior of the polyurethane coating;
Fig. 4 is a cross-sectional view showing the step of demolding the polyurethane coating;
Fig. 5 is a cross-sectional view of the two-component mixing heads for use in molding in the first embodiment;
Fig. 6 is a cross-sectional view of the molded polyurethane coating;
Fig. 7 is a cross-sectional view showing the step of forming the surface area of a polyurethane coating on a steering wheel in the method of molding a two-color part in the second embodiment of the invention;
Fig. 8 is a plan view showing the lower mold used in the second embodiment;
Fig. 9 is a cross-sectional view showing the step of forming the interior of the polyurethane coating;
Fig. 10 is a cross-sectional view showing the step of demolding the polyurethane coating; and
Fig. 11 is a plan view showing the back side of the molded polyurethane coating.

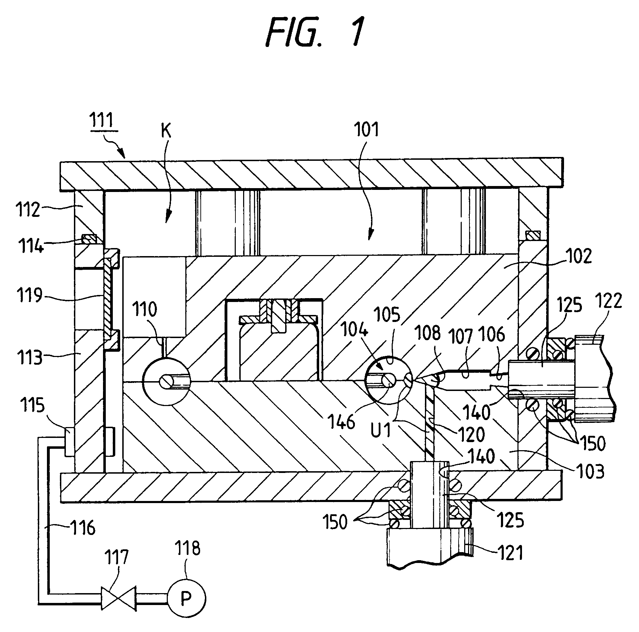

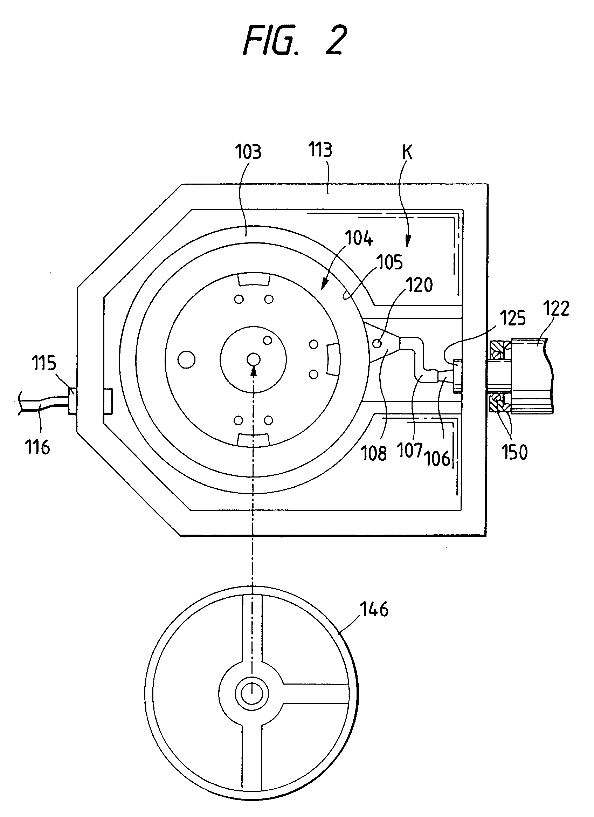

A first embodiment of the present invention in which it is applied to the molding of a two-color RIM polyurethane coating on a steering wheel is described below with reference to Figs. 1 to 6. The molding apparatus to be used in this embodiment comprises basically a mold 101, a vacuum box 111 and two-component component mixing heads 121 and 122. These basic parts of the molding apparatus are described below in detail.

The mold 101 consists of two split parts, an upper mold 102 and a lower mold 103. The parting line between the two molds is provided with a cavity surface 105 that forms an annular cavity 104 upon mold closing, as well as a sprue 106, a runner 107 and a common gate 108 that is open to the cavity 104. The members 106, 107 and 108 provide a feed passageway. The lower mold 103 has a runner 120 that extends upward from the bottom face to be open to the common gate 108. A vent hole 110 is formed in the upper mold 102 at the position where it is to be finally filled with a polyurethane material.

The vacuum box 111 provides an airtight enclosure of the mold 101 containing an empty space K and consists of two split parts, an upper box 112 and a lower box 113. The upper box 112 contains the upper mold 102 and the lower box 113 contains the lower mold 103. The upper box 112 and the lower box 113 are fitted on a clamping unit (not shown); in the embodiment under consideration, the lower box 113 will move up and down, so that the vacuum box 111 is opened and closed in synchronism with the opening and closing of the mold 101. An O-ring 114 is fitted in a groove formed in the parting face of the upper box 112; when the vacuum box 111 is closed, the O-ring 114 will contact the parting face of the lower box 113 so as to seal the space between the upper and lower boxes.

The lower box 113 is fitted with a suction plug 115 which is connected via a suction hose 116 and a valve 117 to a vacuum pump 118. The lower box 113 is also furnished with an inspection window 119 that is provided to insure airtightness and through which the area around the venthole 110 can be seen from the outside of the vacuum box 111.

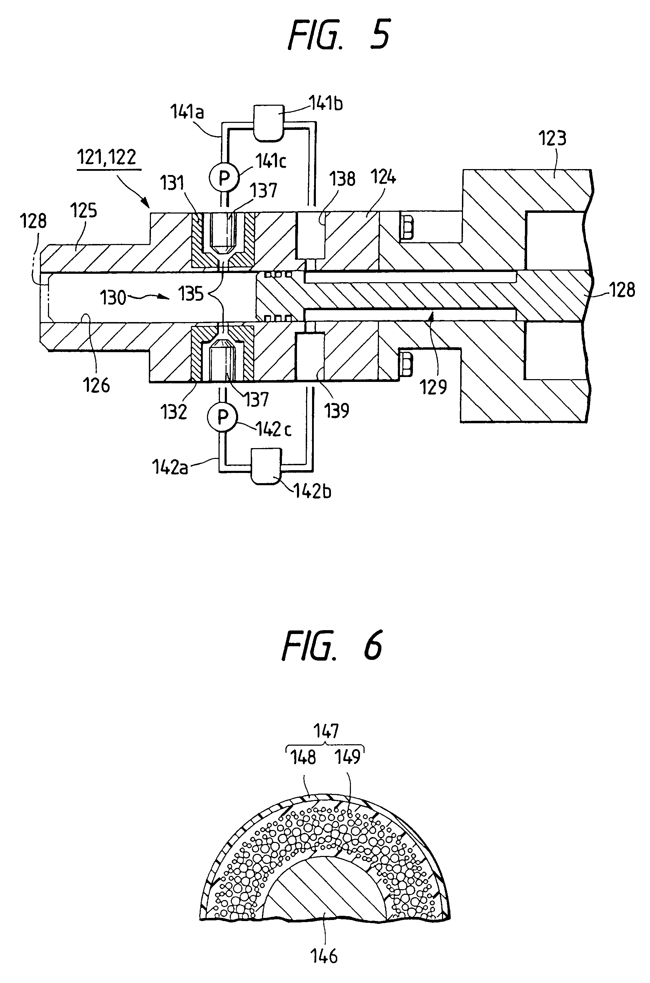

The head 121 for mixing two surface-forming components and the head 122 for mixing two interior-forming components have the same construction and each consists of a cylinder 123 and a body 124 fitted on the distal end as shown in Fig. 5. The body 124 has a slender injection nozzle 125 at the tip. A through-hole 126 is formed in the center of the body 124 and a spool 128 fitted on a piston (not shown) in the cylinder 123 is slidably inserted into the hole 126. A pair of longitudinally extending grooves 129 are formed in diametric positions on the periphery of the spool 128. In response to the reciprocating motion of the piston, the spool 128 slides either to the advanced position shown by a one-long-and-two-short dashed line in Fig. 5 or to the retracted position shown by a solid line in Fig. 5. When in the retracted position, the spool 128 has in front of it a mixing compartment 130 where the necessary components of the feed are to be mixed together in the manner to be described hereinafter.

The body 124 has in its interior a polyol component supply nozzle member 131 which is disposed to face an isocyanate component supply nozzle member 132. Each nozzle member has a tapered orifice 135 formed in such a way that it opens to the mixing compartment 130 or elongated grooves 129. A holder (not shown) of the nozzle members 131 and 132 is fitted around the body 124 and needles 137 are inserted into the holder in such a way that their tips will control the degree of opening of the orifices 135. Next to the nozzle members 131 and 132 in the body 124, there are formed a polyol component returning hole 138 and an isocyanate component returning hole 139, both of which are open to the elongated grooves 129.

The nozzle member 131 and the return hole 138 are connected via hose 141a to a polyol component tank 141b and pump 141c, thereby forming a circulation path of the polyol component (tank 141b → pump 141c → nozzle member 131 → elongated groove 129 → return hole 138 → tank 141c). The nozzle member 132 and the return hole 139 are also connected via hose 142a to an isocyanate component tank 142b and pump 142c, thereby forming a circulation path of the isocyanate component (tank 142b → pump 142c → nozzle member 132 → elongated groove 129 → return hole 139 → tank 142b).

The injection nozzle 125 on the head 121 for mixing two surface-forming components penetrates a through-hole 140 in the bottom plate of the lower box 113 to be connected to the runner 120. The injection nozzle 125 on the head 122 for mixing two interior-forming components penetrates a through-hole 140 in a side plate of the lower box 113 to be connected to the runner 107. The gaps between the mixing head 121 and the inner surface of the through-hole 140 are sealed by means of a plurality of O-rings 150 and so are the gaps between the mixing head 122 and the inner surface of the through-hole 140. Thus, in the embodiment under consideration, two inexpensive heads 121 and 122 are employed for mixing two components and this has the advantage of reducing the equipment cost compared to the use of one head for mixing four components.

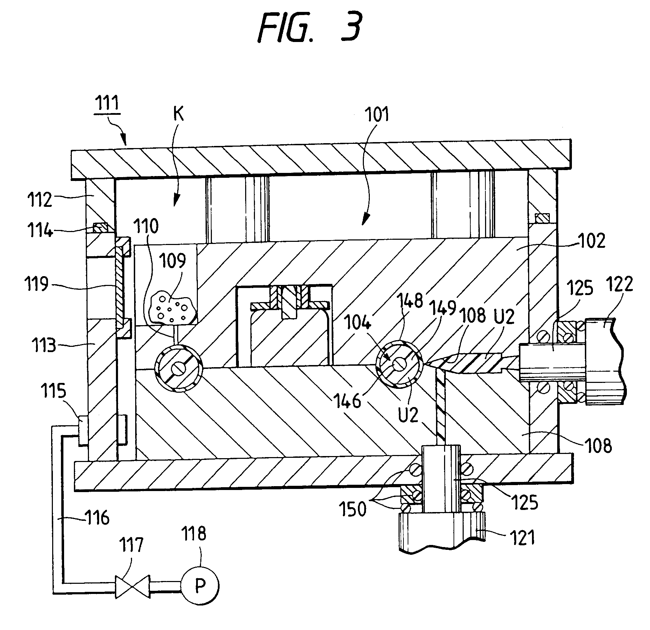

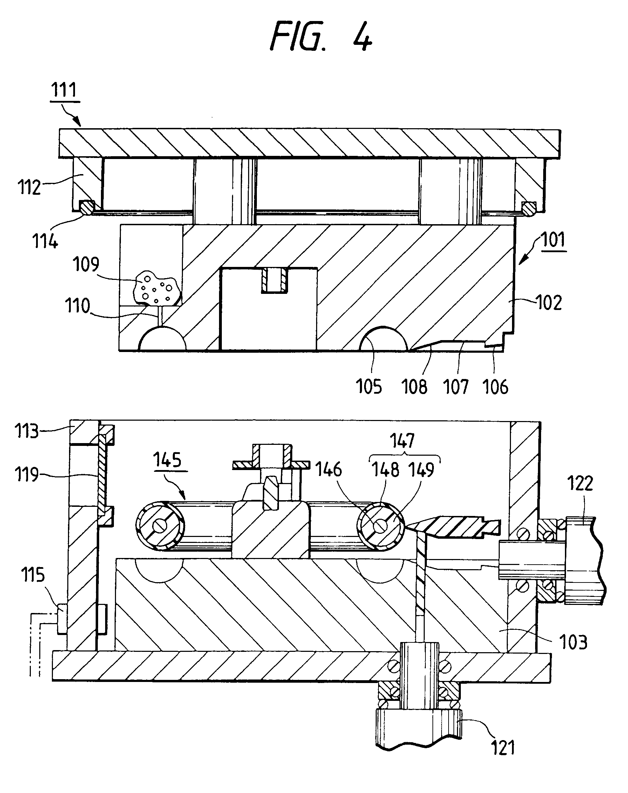

The method of molding a different property polyurethane coating by RIM according to the embodiment under consideration using the apparatus described above is discussed below in terms of the sequence of steps involved.
(1) Open the mold 101 and apply a mold release agent to the cavity surfaces 105 defined by the upper mold 102 and lower mold 103.
(2) Set the core 146 of a steering wheel 145 along the cavity surface 105 in the lower mold 103; then close the mold 101 to form the cavity 104 while, at the same time, the vacuum box 111 is closed airtight.
(3) Operate the vacuum pump 118 to produce a suitable degree of vacuum within the space K in the vacuum box 111 and evacuate the interior of the cavity 104 to generally the same degree of vacuum via the vent hole 107 and through the very small clearance between the surfaces on both sides of the parting line. It should be noted here that the space K serves as an accumulator which prevents the air pressure in the cavity 104 from building up when the molding materials to be described below are injected into the cavity 104 and allowed to foam.
(4) The spool 128 in the head 121 for mixing two surface-forming components is retracted and the polyol component extruded from the nozzle member 131 and the isocyanate component extruded from the nozzle member 132 are delivered into the mixing compartment 130, where they are mixed by impingement to prepare the surface-forming RIM polyurethane material U1. The isocyanate component is made of a comparatively expensive non-yellowing material and loaded with a coloring component. As shown in Fig. 1, the material U1 is injected in a small amount into the evacuated cavity 104 from the injection nozzle 125 on the mixing head 121 through the runner 120 and the common gate 108.
   The injected small amount of surface-forming RIM polyurethane material U1 undergoes a sudden drop in pressure from the existing pressurized state and scatters within the cavity 104 and is deposited as a thin film on the cavity surfaces 105, thereby molding the surface area 148 of a coating 147. Since the space K works as an accumulator, the pressure reduction by means of the vacuum pump 118 may be ceased or continued. After a predetermined amount of the polyurethane material U1 has been injected, the spool 128 is advanced and the injection of the material U1 is stopped.
(5) The spool 128 in the head 122 for mixing two interior-forming components is retracted and the polyol component extruded from the nozzle member 131 and the isocyanate component extruded from the nozzle member 132 are delivered into the mixing compartment 130, where they are mixed by impingement to prepare the interior-forming RIM polyurethane material U2. The isocyanate component is made of a comparatively inexpensive yellowing material and is not loaded with a coloring component. As shown in Fig. 3, the material U2 is injected into the evacuated cavity 104 from the injection nozzle 125 on the mixing head 122 through the runner 107 and the common gate 108. In the embodiment under consideration, the interior-forming RIM polyurethane material U2 is substantially free of a blowing agent.
   The injected interior forming RIM polyurethane material U2 will fill the cavity 104 in the following manner. First, in the part of the material U2 which is distant from the cavity face 105, the gas inherently occluded in U2 will boil up in a vacuum atmosphere, thus forming a core portion of high blow ratio. In the part of the material U2 which is close to the cavity face 105, a dense self-skin producing layer of low blow ratio is formed by the degasifying action in a vacuum atmosphere. Formed in this manner is the interior 149 of the coating 147 that consists of the core and the self-skin producing layer. Here again, the space works K as an accumulator, so the pressure reduction by means of the vacuum pump 118 may be ceased or continued. It should be noted that the flowing tip of the material U2 will slightly blow out of the vent hole 110 in a small amount, thus producing a blowout portion 109.
(6) After confirming that the surface forming RIM polyurethane material U1 and the interior forming RIM polyurethane material U2 have cured, the mold 101 is opened and, at the same time, the vacuum box 111 is opened as shown in Fig. 4. Finally, the steering wheel 145 with the polyurethane coating 147 is taken out of the mold and the blowout portion 109 is removed.

The different property polyurethane coating 147 thus produced by RIM is characterized in that the surface area 148 is adequately tinted with the coloring component in the surface forming RIM polyurethane material U1; furthermore, as shown in Fig. 6, the surface area 148 forms a thin film that covers the entire surface of the colorant-free interior 149 on account of its good hiding power and, hence, the steering wheel provided with the polyurethane coating 147 can be sold as such on the market. Therefore, according to the embodiment under consideration, the step of applying a colorant to the cavity surface 105 prior to molding can be omitted. As a further advantage, the coating 147 which has been molded using the comparatively expensive non-yellowing material in no other areas than the surface area 148 can be produced at a lower cost than when the entire part of the coating is molded from the non-yellowing material.

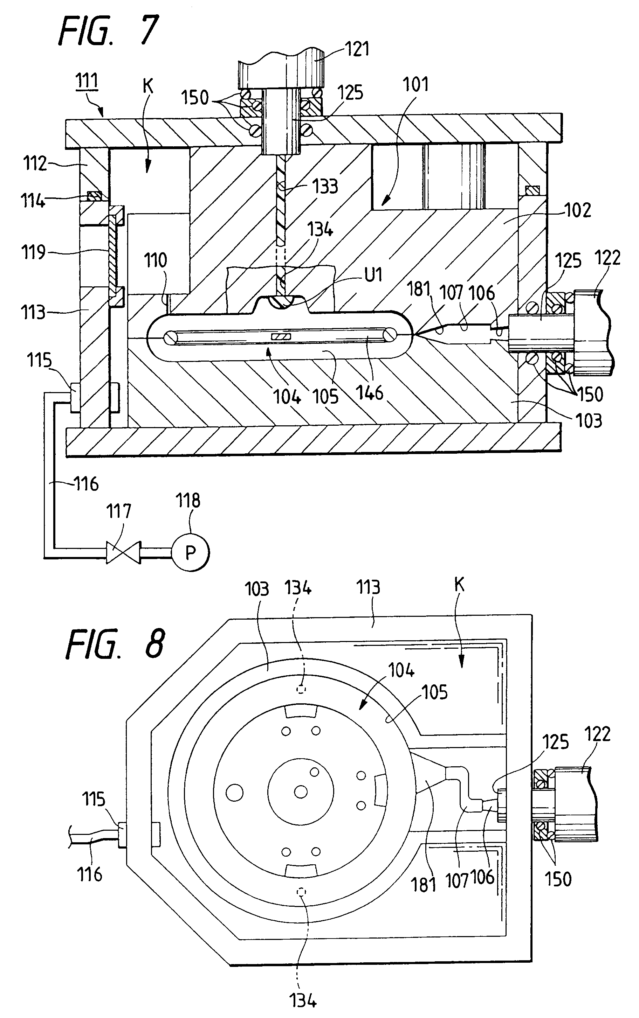

A second embodiment of the present invention is described below with reference to Figs. 7 to 11. In the second embodiment, the surface area 148 is molded only at a specified site of the coating 147 and the molding apparatus to be used is the same as in the first embodiment except for the following points.

The upper mold 102 has a runner 133 extending downward from the top surface and two surface-forming gates 134 that diverge from the bottom end of the runner 133 and which are open to two diametric sites halfway in the space forming part of the cavity 104. The lower mold 103 is shown in Fig. 8, which also indicates the positions of the surface-forming gates 134 in the upper mold 102 by dashed lines. The injection nozzle 125 on the head 121 for mixing two surface-forming components penetrates a through-hole 140 formed in the top plate of the upper box 112 and is connected to the runner 133. The common gate 108 in the first embodiment is used as an interior forming gate 181 in the second embodiment and it has nothing like the opening to the runner 120 which is formed in the first embodiment.

The method of molding a different property polyurethane coating by RIM according to the second embodiment using the apparatus described above is discussed below in terms of the sequence of steps involved. Steps (1) to (3) in the first embodiment are also performed in the second embodiment and may be omitted from the following description which is only directed to the subsequent steps.

(4) As in the first embodiment, the head 121 for mixing two surface-forming components is used to prepare the surface-forming RIM polyurethane material U1. As shown in Fig. 7, the material U1 is injected in a small amount into the evacuated cavity 104 from the injection nozzle 125 on the head 121 through the runner 133 and the two surface-forming gates 134.

As in the first embodiment, the injected small amount of surface-forming RIM polyurethane material U1 scatters to provide a thin-film deposit on the cavity surface 105. The difference is that in the second embodiment, the amount of injection of the material U1 is adjusted in such a way that it will scatter over the limited sites of the cavity surface 105 around the two surface-forming gates 134 and, hence, the surface area 148 of the coating 147 is only molded at those sites.

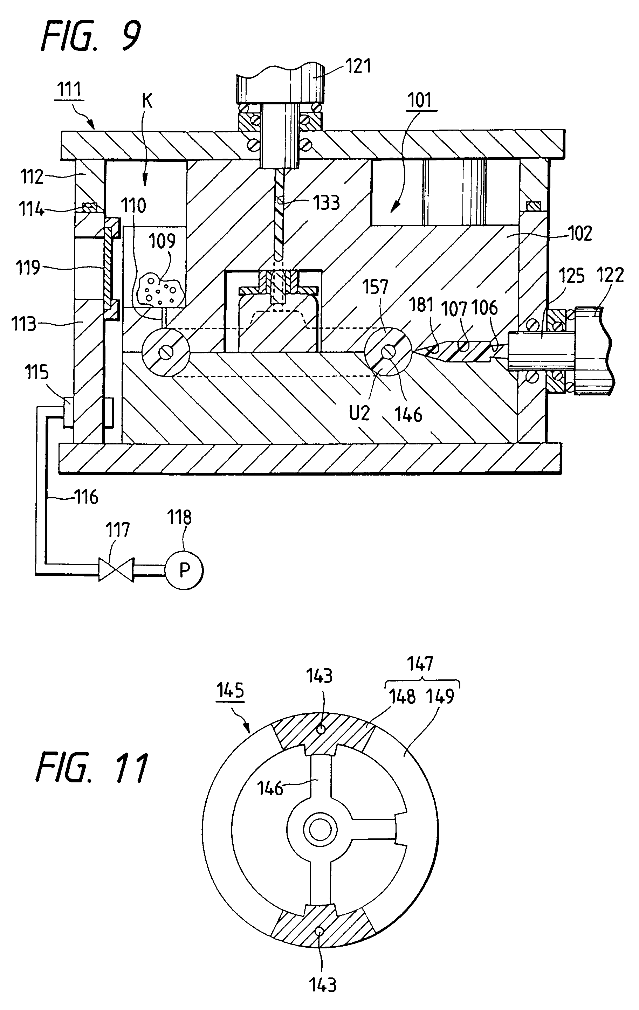

(5) As in the first embodiment, the head 122 for mixing two interior-forming components is used to prepare the interior-forming RIM polyurethane material U2. The polyol component of the material U2 is made of a non-yellowing material and loaded with a coloring component that renders a different color than the surface-forming RIM polyurethane material U1; the material U2 is so formulated that it will produce a softer interior 149 than the surface area 148 after molding. As shown in Fig. 9, the material U2 is injected into the evacuated cavity 104 from the injection nozzle 125 on the head 122 through the runner 107 and the interior-forming gate 181.

As in the first embodiment, the injected inter-forming RIM polyurethane material U2 fills the cavity 104 to form the interior 149 which consists of a core and a self-skin producing layer.

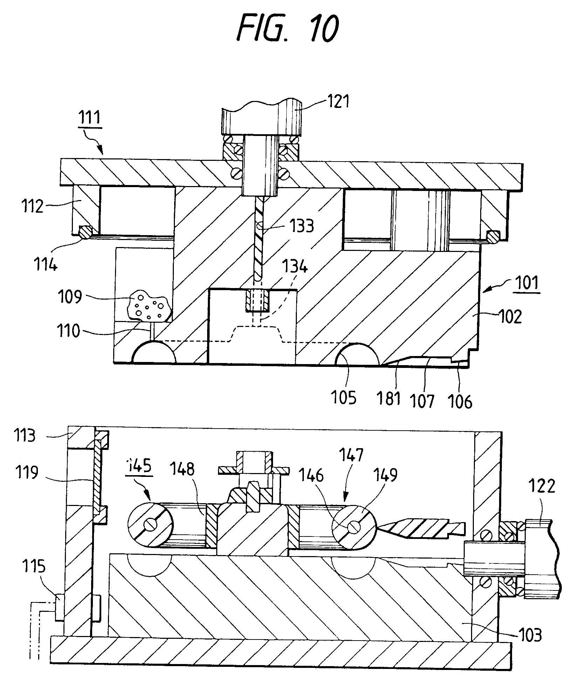

(6) As shown in Fig. 10, the mold 101 is opened and the steering wheel 145 with the polyurethane coating 147 is taken out of the mold and the blowout portion 109 is removed.

The external appearance of the thus RIM molded different property polyurethane coating 147 is shown in Fig. 11; the surface area 148 which is colored an which is harder than the interior 149 is formed only at tow diametric grip sites and the interior 149 which is rendered a different color and which is softer than the surface area 148 shows out at the other sites. Therefore, site-dependent alterations can be made with respect to the color and the hand of the molded part. The coating 147 has vestigial marks 143 due to the surface-forming gates 134 but they are not conspicuous since they are on the back side of the steering wheel 145.

It should be noted that the present invention is in no way limited to the two embodiments described on the foregoing pages and it can be embodied with the following various design modifications without departing from the invention as defined by the claims:
(1) it can be embodied in the production of various two-color RIM molded polyurethane parts such as steering wheel pads;
(2) the first embodiment may be modified in such a way that a release agent is added to the surface-forming RIM polyurethane material, thereby assuring better release of the two-color part from the mold, with the added advantage of the possibility that the application of the release agent to the cavity surfaces can be omitted; and
(3) the second embodiment may be modified in such a way that the interior-forming RIM polyurethane material is given a formulation that prevents or retards the formation of a self-skin producing layer, whereby asperities due to the air bubbles in the core portion are exposed on the surface to alter its appearance and hand.

As described above in detail, the method of molding different property polyurethane parts by RIM as recited in claim 1 or the apparatus for implementing that method as recited in claim 6 assures that two-color parts that have different colors, properties, etc. in the surface and the interior are easily produced by the RIM molding of polyurethane; furthermore, this-can be accomplished using two or more inexpensive heads for mixing two components, thereby offering the desired advantage of lower equipment cost.

In addition to these advantages, the method of molding different property polyurethane parts by RIM as recited in claim 12 or the apparatus for implementing that method as recited in claim 18 assures that a surface area that is different from the interior in color, properties, etc. can be selectively formed in desired sites of the molded part.

## Claims

1. A method of molding a part by RIM comprising a surface layer and an interior layer having different properties, which comprises the steps of reducing the pressure in the cavity (104) of a mold (101);
wherein
a small amount of a surface forming RIM polyurethane material is injected into said evacuated cavity (104) through a common gate (108) for said mold from a first head (121) for mixing two surface-forming components, thereby RIM forming the surface of the part to be molded: and
thereafter, an interior-forming RIM polyurethane material being different from the surface forming RIM polyurethane material, is injected into said evacuated cavity (104) through said common gate (108) from a second head (122) for mixing two interior-forming components, thereby RIM forming the interior of the part to be molded.

2. The method according to claim 1, wherein
a polyol is supplied to a first nozzle (131) of said first head (121) and an isocyanate is supplied to a second nozzle (132) of said first head (121) which is then injected into said evacuated cavity (104) to form a polyurethane surface layer, and
a polyol is supplied to a first nozzle (131) of said second head (122) and an isocyanate is supplied to a second nozzle (132) of said second head (122) which is then injected into said evacuated cavity (104) to form a polyurethane interior layer.

3. The method according to claim 2, wherein
a non-yellowing isocyanate is supplied to said second nozzle (132) of said first head (121), and
a yellowing isocyanate is supplied to said second nozzle (132) of said second head (122).

4. The method according to anyone of claims 1 to 3. wherein the pressure in said cavity (104) is reduced to an amount to provide a surface layer which covers the interior layer.

5. The method according to anyone of claims 1 to 4, wherein an auxiliary component is supplied along with at least one of said surface forming components and said interior forming components.

6. An apparatus for molding a part by RIM comprising a surface layer and an interior layer having different properties, which comprises
means (111, 115 to 118) for reducing the pressure in a cavity (104) of a mold (101),
a common gate (108) that is open to said cavity (104),
a first head (121) for mixing surface-forming components that is connected to said common gate (108); and
a second head (122) for mixing interior-forming components being different from the surface-forming components, the second head (122) also being connected to said common gate (108).

7. The apparatus according to claim 6, wherein the first head (121) comprising at least two nozzles (131, 132) for mixing two different surface-forming components and said second head (122) comprises at least two nozzles (131, 132) for mixing two different interior-forming components.

8. The apparatus according to claim 6, wherein the first head comprises two nozzles for mixing two different surface-forming components and said second head comprises two nozzles for mixing two different interior-forming components.

9. The apparatus according to claim 6, 7 or 8, wherein said means (111, 115 to 118) for reducing the pressure comprises a vacuum pump (118) and a chamber (111) encasing said mold.

10. The apparatus according to claim 9, wherein said chamber (111) comprises a means for opening said chamber and, in the same motion, said mold (101) for accessing said cavity of said mold.

11. The apparatus according to claim 9 or 10, wherein said chamber (111) comprises a means (119) for viewing said mold.

12. A method of molding a part by AIM comprising a surface layer and an interior layer having different properties, which comprises the steps of reducing the pressure in the cavity (104) of a mold (101);
wherein
a small amount of a surface forming RIM polyurethane material is injected into said evacuated cavity (104) through a surface-forming gate (134) on said mold from a first head (121) for mixing two surface-forming components, thereby RIM forming the surface of the part to be molded; and
thereafter, an interior-forming RIM polyurethane material being different from the surface forming RIM polyurethane material, is injected into said evacuated cavity (104) through an interior-forming gate (181) from a second head (122) for mixing two interior-forming components, thereby RIM forming the interior of the part to be molded, said interior-forming gate (181) being located in a different position from said surface-forming gate (134).

13. The method according to claim 12, wherein
a polyol is supplied to a first nozzle (131) of said first head (121) and an isocyanate is supplied to a second nozzle (132) of said first head (121) which is then injected into said evacuated cavity (104) to form a polyurethane surface layer, and
a polyol is supplied to a first nozzle (131) of said second head (122) and an isocyanate is supplied to a second nozzle (132) of said second head (122) which is then injected into said evacuated cavity (104) to form a polyurethane interior layer.

14. The method according to claim 13, wherein
a non-yellowing isocyanate is supplied to said second nozzle (132) of said first head (121), and
a yellowing isocyanate is supplied to said second nozzle (132) of said second head (122).

15. The method according to claim 12, 13 or 14, wherein an auxiliary component is supplied along with at least one of said surface forming components and said interior forming components.

16. The method according to anyone of claims 12 to 15, wherein the pressure in said cavity (104) is reduced to an amount to provide a surface layer which completely covers the interior layer.

17. The method according to anyone of claims 12 to 15, wherein the pressure in said cavity (104) is reduced to an amount to provide a surface layer which partly covers the interior layer.

18. An apparatus for molding a part by RIM comprising a surface layer and an interior layer having different properties, which comprises
means (111, 115 to 118) of reducing the pressure in a cavity (104) of a mold (101),
said mold (101) having a surface-forming gate (134), and an interior-forming gate (181) that are open to said cavity (104) of said mold in different positions;
a first head (121) for mixing two surface-forming components that is connected to said surface-forming gate (134); and
a second head (122) for mixing two interior-forming components being different from the surface-forming components, the second head (122) being connected to said interior-forming gate (181).

19. The apparatus according to claim 18, wherein the first head (121) comprises at least two nozzles (131, 132) for mixing two different surface-forming components and said second head (122) comprises at least two nozzles (131, 132) for mixing two different interior-forming components.

20. The apparatus according to claim 18, wherein the first head (121) comprises two nozzles (131, 132) for mixing two different surface-forming components and said second head (122) comprises two nozzles (131, 132) for mixing two different interior-forming components.

21. The apparatus according to claim 18, 19 or 20, wherein said means (111, 115 to 118) for reducing the pressure comprises a vacuum pump (118) and a chamber (111) encasing said mold (101).

22. The apparatus according to claim 21, wherein said chamber (111) comprises means for opening said chamber and, in the same motion, said mold (104) for accessing said cavity of said mold.

23. The apparatus according to claim 21, wherein said chamber (111) comprises a means (119) for viewing said mold.

## Patentansprüche

1. Verfahren zum Formen eines Teiles durch RIM, das eine Oberflächenschicht und eine Innenschicht, die unterschiedliche Eigenschaften haben, aufweist, das den Schritt des Reduzierens des Druckes in dem Hohlraum (104) einer Form (101) aufweist,
bei dem
eine kleine Menge eines oberflächenbildenden RIM-Polyurethanmaterials in den evakuierten Hohlraum (104) durch einen gemeinsamen Einlauf (108) für die Form aus einem ersten Kopf (121) zum Mischen von zwei oberflächenformenden Komponenten injiziert wird, wodurch die Oberfläche des zu formenden Teils RIM-ausgebildet wird, und
danach ein innenteilbildendes RIM-Polyurethanmaterial, das unterschiedlich von dem oberflächenbildenden RIM-Polyurethanmaterial ist, in den evakuierten Hohlraum (104) durch den gemeinsamen Einlauf (108) von einem zweiten Kopf (122) zum Mischen von zwei innenteilbildenden Komponenten injiziert wird, wodurch das Innere des zu formenden Teils RIM-ausgebildet wird.

2. Verfahren nach Anspruch 1, bei dem
ein Polyol einer ersten Düse (131) des ersten Kopfes (121) zugeführt und ein Isocyanat einer zweiten Düse (132) des ersten Kopfes zugeführt wird, das dann in den evakuierten Hohlraum (104) zur Ausbildung einer Polyurethanoberflächenschicht injiziert wird, und
ein Polyol einer ersten Düse (131) des zweiten Kopfes (122) zugeführt und ein Isocyanat einer zweiten Düse (132) des zweiten Kopfes (122) zugeführt wird, das dann in den evakuierten Hohlraum (104) zur Ausbildung einer Polyurethaninnenschicht injiziert wird.

3. Verfahren nach Anspruch 2, bei dem
ein nicht-vergilbendes Isocyanat der zweiten Düse (132) des ersten Kopfes (121) zugeführt wird, und
ein vergilbendes Isocyanat der zweiten Düse (132) des zweiten Kopfes (122) zugeführt wird.

4. Verfahren nach einem der Ansprüche 1 bis 3, bei dem
der Druck in dem Hohlraum (104) in einem Ausmaß zum Liefern einer Oberflächenschicht, die die Innenschicht bedeckt, reduziert wird.

5. Verfahren nach einem der Ansprüche 1 bis 4, bei dem
eine Hilfskomponente zusammen mit mindestens einer der oberflächenbildenden Komponenten und der innenteilbildenden Komponenten zugeführt wird.

6. Vorrichtung zum Formen eines Teiles durch RIM, das eine Oberflächenschicht und eine Innenschicht, die unterschiedliche Eigenschaften aufweisen, aufweist, mit
einem Mittel (111, 115-118) zum Reduzieren des Druckes in einem Hohlraum (104) einer Form (101),
einem gemeinsamen Einlauf (108), der zu dem Hohlraum (104) offen ist,
einem ersten Kopf (121) zum Mischen von oberflächenbildenden Komponenten, der mit dem gemeinsamen Einlauf (108) verbunden ist, und
einem zweiten Kopf (122) zum Mischen von innenteilbildenden Komponenten, die unterschiedlich von den oberflächenbildenden Komponenten sind, wobei der zweite Kopf (122) auch mit dem gemeinsamen Einlauf (108) verbunden ist.

7. Vorrichtung nach Anspruch 6, bei dem
der erste Kopf (121) mindestens zwei Düsen (131, 132) zum Mischen von zwei unterschiedlichen oberflächenbildenden Komponenten aufweist und der zweite Kopf (122) mindestens zwei Düsen (131, 132) zum Mischen von zwei unterschiedlichen innenteilbildenden Komponenten aufweist.

8. Vorrichtung nach Anspruch 6, bei der
der erste Kopf zwei Düsen zum Mischen von zwei unterschiedlichen oberflächenbildenden Komponenten aufweist und der zweite Kopf zwei Düsen zum Mischen von zwei unterschiedlichen innenteilbildenden Komponenten aufweist.

9. Vorrichtung nach Anspruch 6, 7 oder 8, bei dem
das Mittel (111, 115-118) zum Reduzieren des Druckes eine Vakuumpumpe (118) und eine Kammer (111), die die Form ummantelt, aufweist.

10. Vorrichtung nach Anspruch 9, bei der
die Kammer (111) ein Mittel zum Öffnen der Kammer und, in derselben Bewegung, der Form (101) zum Zugang zu dem Hohlraum der Form aufweist.

11. Vorrichtung nach Anspruch 9 oder 10, bei der
die Kammer (111) ein Mittel (119) zum Sehen der Form aufweist.

12. Verfahren zum Formen eines Teiles durch RIM, das eine Oberflächenschicht und eine Innenschicht, die unterschiedliche Eigenschaften aufweisen, aufweist, das den Schritt des Reduzierens des Druckes in dem Hohlraum (104) einer Form (101) aufweist,
bei dem
eine kleine Menge eines oberflächenbildenden RIM-Polyurethanmaterials in den evakuierten Hohlraum (104) durch einen oberflächenbildenden Einlauf (134) an der Form aus einem ersten Kopf (121) zum Mischen von zwei oberflächenformenden Komponenten injiziert wird, wodurch die Oberfläche des zu formenden Teils RIM-ausgebildet wird, und danach ein innenteilbildendes RIM-Polyurethanmaterial, das unterschiedlich von dem oberflächenbildenden RIM-Polyurethanmaterial ist, in den evakuierten Hohlraum (104) durch einen innenteilbildenden Einlauf (181) von einem zweiten Kopf (122) zum Mischen von zwei innenteilbildenden Komponenten injiziert wird, wodurch das Innere des zu formenden Teils RIM-ausgebildet wird, wobei der innenteilbildende Einlauf (181) in einer unterschiedlichen Position gegenüber dem oberflächenbildenden Einlauf (134) befindlich ist.

13. Verfahren nach Anspruch 12, bei dem
ein Polyol einer ersten Düse (131) des ersten Kopfes (121) zugeführt und ein Isocyanat einer zweiten Düse (132) des ersten Kopfes zugeführt wird, das dann in den evakuierten Hohlraum (104) zur Ausbildung einer Polyurethanoberflächenschicht injiziert wird, und
ein Polyol einer ersten Düse (131) des Zweiten Kopfes (122) zugeführt und ein Isocyanat einer zweiten Düse (132) des zweiten Kopfes (122) zugeführt wird, das dann in den evakuierten Hohlraum (104) zur Ausbildung einer Polyurethaninnenschicht injiziert wird.

14. Verfahren nach Anspruch 13, bei dem
ein nicht-vergilbendes Isocyanat der zweiten Düse (132) des ersten Kopfes (121) zugeführt wird, und
ein vergilbendes Isocyanat der zweiten Düse (132) des zweiten Kopfes (122) zugeführt wird.

15. Verfahren nach Anspruch 12, 13 oder 14, bei dem
eine Hilfskomponente zusammen mit mindestens einer der oberflächenbildenden Komponenten und der innenteilbildenden Komponenten zugeführt wird.

16. Verfahren nach einem der Ansprüche 12 bis 15, bei dem
der Druck in dem Hohlraum (104) in einem Ausmaß zum Liefern einer Oberflächenschicht, der die Innenschicht vollständig bedeckt reduziert wird.

17. Verfahren nach einem der Ansprüche 12 bis 15, bei dem
der Druck in dem Hohlraum (104) in einem Ausmaß zum Liefern einer Oberflächenschicht, der die Innenschicht teilweise bedeckt reduziert wird.

18. Vorrichtung zum Formen eines Teiles durch RIM, das eine Oberflächenschicht und eine Innenschicht, die unterschiedliche Eigenschaften aufweisen, aufweist, mit
einem Mittel (111, 115-118) zum Reduzieren des Druckes in einem Hohlraum (104) einer Form (101),
wobei die Form (101) einen oberflächenbildenden Einlauf (134) und einen innenteilbildenden Einlauf (181) aufweist, die zum dem Hohlraum (104) der Form in unterschiedlichen Positionen offen sind,
einem ersten Kopf (121) zum Mischen von oberflächenbildenden Komponenten, der mit dem oberflächenbildenden Einlauf (134) verbunden ist, und
einem zweiten Kopf (122) zum Mischen von innenteilbildenden Komponenten, die unterschiedlich von den oberflächenbildenden Komponenten sind, wobei der zweite Kopf (122) mit dem innenteilbildenden Einlauf (181) verbunden ist.

19. Verfahren nach Anspruch 18, bei dem
der erste Kopf (121) mindestens zwei Düsen (131, 132) zum Mischen von zwei unterschiedlichen oberflächenbildenden Komponenten aufweist und der zweite Kopf (122) mindestens zwei Düsen (131, 132) zum Mischen von zwei unterschiedlichen innenteilbildenden Komponenten aufweist.

20. Verfahren nach Anspruch 18, bei dem
der erste Kopf (121) zwei Düsen (131, 132) zum Mischen von zwei unterschiedlichen oberflächenbildenden Komponenten aufweist und der zweite Kopf (122) zwei Düsen (131, 132) zum Mischen von zwei unterschiedlichen innenteilbildenden Komponenten aufweist.

21. Vorrichtung nach Anspruch 18, 19 oder 20, bei dem
das Mittel (111, 115-118) zum Reduzieren des Druckes eine Vakuumpumpe (118) und eine Kammer (111), die die Form ummantelt, aufweist.

22. Vorrichtung nach Anspruch 21, bei der
die Kammer (111) ein Mittel zum Öffnen der Kammer und, in derselben Bewegung, der Form (101) zum Zugang zu dem Hohlraum der Form aufweist.

23. Vorrichtung nach Anspruch 21, bei der
die Kammer (111) ein Mittel (119) zum Sehen der Form aufweist.

## Revendications

1. Procédé de moulage d'une pièce par RIM comprenant une couche de surface et une couche intérieure ayant des propriétés différentes, lequel comprend les étapes de réduction de la pression dans la cavité (104) d'un moule (101);
dans lequel
une petite quantité d'un matériau de polyuréthane RIM formant la surface est injectée dans ladite cavité mise sous vide (104) à travers une entrée commune (108) pour ledit moule à partir d'une première tête (121) pour mélanger deux constituants formant la surface, formant par là par RIM la surface de la pièce à mouler et
un matériau de polyuréthane RIM formant l'intérieur différent du matériau de polyuréthane RIM formant la surface est après cela injecté dans ladite cavité mise sous vide (104) à travers ladite entrée commune (108) à partir d'une seconde tête (122) pour mélanger deux constituants formant l'intérieur, formant par là par RIM l'intérieur de la pièce à mouler.

2. Procédé selon la revendication 1, dans lequel
un polyol est introduit dans une première buse (131) de ladite première tête (121) et un isocyanate est introduit dans une seconde buse (132) de ladite première tête (121) qui est ensuite injecté dans ladite cavité mise sous vide (104) pour former une couche de surface de polyuréthane, et
un polyol est introduit dans une première buse (131) de ladite seconde tête (122) et un isocyanate est introduit dans une seconde buse (132) de ladite seconde tête (122) qui est ensuite injecté dans ladite cavité mise sous vide (104) pour former une couche intérieure de polyuréthane.

3. Procédé selon la revendication 2, dans lequel
un isocyanate non jaunissant est introduit dans ladite seconde buse (132) de ladite première tête (121), et
un isocyanate jaunissant est introduit dans ladite seconde buse (132) de ladite seconde tête (122).

4. Procédé selon l'une quelconque des revendications 1 à 3, dans lequel la pression dans ladite cavité (104) est réduite dans une quantité pour fournir une couche de surface qui recouvre la couche intérieure.

5. Procédé selon l'une quelconque des revendications 1 à 4, dans lequel un constituant auxiliaire est introduit avec au moins un desdits constituants formant la surface et desdits constituants formant l'intérieur.

6. Appareil pour le moulage d'une pièce par RIM comprenant une couche de surface et une couche intérieure ayant des propriétés différentes, lequel comprend
des moyens (111, 115 à 118) pour réduire la pression dans une cavité (104) d'un moule (101),
une entrée commune (108) qui est ouverte sur ladite cavité (104),
une première tête (121) pour mélanger les constituants formant la surface qui est raccordée à ladite entrée commune (108); et
une seconde tête (122) pour mélanger des constituants formant l'intérieur différents des constituants formant la surface, la seconde tête (122) étant également raccordée à ladite entrée commune (108).

7. Appareil selon la revendication 6, dans lequel la première tête (121) comprend au moins deux buses (131, 132) pour mélanger deux constituants différents formant la surface et ladite seconde tête (122) comprend au moins deux buses (131, 132) pour mélanger deux constituants différents formant l'intérieur.

8. Appareil selon la revendication 6, dans lequel la première tête comprend deux buses pour mélanger deux constituants différents formant la surface et ladite seconde tête comprend deux buses pour mélanger deux constituants différents formant l'intérieur.

9. Appareil selon la revendication 6, 7 ou 8, dans lequel lesdits moyens (111, 115 à 118) pour réduire la pression comprennent une pompe à vide (118) et une chambre (111) englobant ledit moule.

10. Appareil selon la revendication 9, dans lequel ladite chambre (111) comprend un moyen pour ouvrir ladite chambre et, dans le même mouvement, ledit moule (101) pour accéder à ladite cavité dudit moule.

11. Appareil selon la revendication 9 ou 10, dans lequel ladite chambre (111) comprend un moyen (119) pour voir ledit moule.

12. Procédé de moulage d'une pièce par RIM comprenant une couche de surface et une couche intérieure ayant des propriétés différentes, lequel comprend les étapes de réduction de la pression dans la cavité (104) d'un moule (101);
dans lequel
une petite quantité d'un matériau de polyuréthane RIM formant la surface est injectée dans ladite cavité mise sous vide (104) à travers une entrée formant la surface (134) sur ledit moule à partir d'une première tête (121) pour mélanger deux constituants formant la surface, formant par là par RIM la surface de la pièce à mouler; et
un matériau de polyuréthane RIM formant l'intérieur différent du matériau de polyuréthane RIM formant la surface est après cela injecté dans ladite cavité mise sous vide (104) à travers une entrée formant l'intérieur (181) à partir d'une seconde tête (122) pour mélanger deux constituants formant l'intérieur, formant par là par RIM l'intérieur de la pièce à mouler, ladite entrée formant l'intérieur (181) étant disposée à un endroit différent de ladite entrée formant la surface (134).

13. Procédé selon la revendication 12, dans lequel
un polyol est introduit dans une première buse (131) de ladite première tête (121) et un isocyanate est introduit dans une seconde buse (132) de ladite première tête (121 qui est ensuite injecté dans ladite cavité mise sous vide (104) pour former une couche de surface de polyuréthane, et
un polyol est introduit dans une première buse (131) de ladite seconde tête (122) et un isocyanate est introduit dans une seconde buse (132) de ladite seconde tête (122) qui est ensuite injecté dans ladite cavité mise sous vide (104) pour former une couche intérieure de polyuréthane.

14. Procédé selon la revendication 13, dans lequel
un isocyanate non jaunissant est introduit dans ladite seconde buse (132) de ladite première tête (121), et
un isocyanate jaunissant est introduit dans ladite seconde buse (132) de ladite seconde tête (122).

15. Procédé selon la revendication 12, 13 ou 14, dans lequel un constituant auxiliaire est introduit avec au moins l'un desdits constituants formant la surface et desdits constituants formant l'intérieur.

16. Procédé selon l'une quelconque des revendications 12 à 15, dans lequel la pression dans ladite cavité (104) est réduite dans une quantité pour fournir une couche de surface qui recouvre complètement la couche intérieure.

17. Procédé selon l'une quelconque des revendications 12 à 15, dans lequel la pression dans ladite cavité (104) est réduite dans une quantité pour fournir une couche de surface qui recouvre partiellement la couche intérieure.

18. Appareil pour le moulage d'une pièce par RIM comprenant une couche de surface et une couche intérieure ayant des propriétés différentes, lequel comprend
des moyens (111, 115 à 118) de réduction de la pression dans une cavité (104) d'un moule (101),
ledit moule (101) ayant une entrée formant la surface (134) et une entrée formant l'intérieur (181) qui sont ouvertes sur ladite cavité (104) dudit moule à des endroits différents;
une première tête (121) pour mélanger deux constituants formant la surface qui est raccordée à ladite entrée formant la surface (134); et
une seconde tête (122) pour mélanger deux constituants formant l'intérieur différents des constituants formant la surface, la seconde tête (122) étant raccordée à ladite entrée formant l'intérieur (181).

19. Appareil selon la revendication 18, dans lequel la première tête (121) comprend au moins deux buses (131, 132) pour mélanger deux constituants différents formant la surface et ladite seconde tête (122) comprend au moins deux buses (131, 132) pour mélanger deux constituants différents formant l'intérieur.

20. Appareil selon la revendication 18, dans lequel la première tête (121) comprend deux buses (131, 132) pour mélanger deux constituants différents formant la surface et ladite seconde tête (122) comprend deux buses (131, 132) pour mélanger deux constituants différents formant l'intérieur.

21. Appareil selon la revendication 18, 19 ou 20, dans lequel ledit moyen (111, 115 à 118) pour réduire la pression comprend une pompe à vide (118) et une chambre (111) englobant ledit moule (101).

22. Appareil selon la revendication 21, dans lequel ladite chambre (111) comprend un moyen pour ouvrir ladite chambre et, dans le même mouvement, ledit moule (104) pour accéder à ladite cavité dudit moule.

23. Appareil selon la revendication 21, dans lequel ladite chambre (111) comprend un moyen (119) pour voir ledit moule.
